# EUROPEAN PATENT APPLICATION

(11) **EP 3 869 338 A1**
(43) Date of publication of application: **25.08.2021**
(21) Application number: 20157822.6
(22) Date of filing: 18.02.2020
(51) Int. Cl.: G06F 11/07, G06F 11/16, G06F 11/18

(54) **A VEHICLE SAFETY ELECTRONIC CONTROL SYSTEM**

(71) Applicant: Veoneer Sweden AB, 447 37 Vårgårda (SE)
(72) Inventor: KOLLMER, Norbert, 85716 Unterschleißheim (DE); BLATTNER, Jürgen, 85716 Unterschleißheim (DE)
(74) Representative: Reichert & Lindner Partnerschaft Patentanwälte

(57) **Abstract**

The invention relates to a vehicle electronic control system (1) for safety relevant applications. The vehicle electronic control system (1) comprises a performance cluster (11P) and a safety island (11S) both or which are realized on a system-on-chip (11). At least two cores (16, 17) are part of the performance cluster (11P). At least one lockstep core (14) is part of the safety island (11S), wherein said lockstep core (14) is configured to monitor and control outputs of said at least two cores (16, 17) of the performance cluster (11P).

## Description

### FIELD OF THE INVENTION

The present invention relates to a vehicle safety electronic control system.

### DESCRIPTION OF THE BACKGROUND ART

Electronic systems for safety-relevant applications are now very widely used in motor vehicles. Such safety systems may include, for example: blind spot monitoring systems; active cruise control systems; pre-safe braking systems; collision avoidance systems; lane departure prevention systems; and rear-collision mitigation systems.

The complex nature of modern vehicular systems for safety-relevant applications place great importance on the performance and reliability of the electronic control systems which are required to provide and manage the safety systems. Such vehicle electronic control systems typically include integrated hardware and software in order to host and run so-called Advanced Driver Assistance Systems (ADAS) and/or Assisted Driving (AD) algorithms and the like.

Such systems are required to satisfy very stringent safety requirements such as the ISO 26262 Functional Safety for Road Vehicles standard which defines a so-called Automotive Safety Integrity Level (ASIL) risk classification scheme. ASIL-D represents the highest integrity requirements under this standard and is applicable to safety-related processing tasks.

A requirement of the functional safety standard is that the control system must be capable of identifying safety relevant errors in its arithmetic, logical and memory units, which is only possible for an ASIL-D electronic control unit if a lockstep processor architecture is used. However, lockstep architectures of this type have only a relatively low processing power which is insufficient to handle modern applications like ADAS with a set of suitable sensors such as Radar, Lidar, Night Vision, Imaging Radar and/or cameras. There is therefore a need for a vehicle safety electronic control system which is capable of providing improved processing power whilst satisfying the required safety integrity requirements.

In present vehicle electronic control systems the amount of data increases and the and the time for data processing decreases. Therefore, an increased processing power is correlated with high input current and the generation of heat. Also, the number of individual devices used in a housing, increases the housing size and the complexity of the passive or active cooling. Additionally, the data transmission speed between the components is limited to the interface and the shielding possibilities of the printed circuit board (PCB). Consequently, the individual components, which need to communicate between each other increase the number of soldered pins and reduce the overall reliability of the system.

Current highperformance microprocessors are too complex to achieve the required safety integrity requirements via cyclic diagnostic tests for permanent and transient error detection.

The European Patent EP 3 085 596 B1 discloses a vehicle safety electronic control system, which is preferably provided in the form of an integrated electronic control unit. The system comprises a first microcontroller having a lockstep architecture with a lockstep core. Furthermore, the system comprises a separated second microcontroller, having at least two processing cores. The lockstep core of the first microcontroller is configured to monitor and control outputs of said at least two cores of the second microcontroller.

US 2012/0265405 A1 discloses a vehicular control apparatus which includes a mother unit having a microcomputer, a plurality of ECU modules connected to the mother unit. The mother unit is detachably and configured to execute respective vehicle controls, an operation data communication section for communicating with the microcomputer operation data used by the plurality of ECU modules in executing respective control operation processing. An alternative operation execution section is provided as well for causing at least one of the other ECU modules and the microcomputer to execute, as an alternative operation, at least a part of the arithmetic operation processing, which is to be executed by at least one of the pluralities of the ECU modules.

US Patent US 7 290 169 B2 discloses a microprocessor with multiple cores and lockstep logic which can detect differences between the output signals of the multiple cores.

US Patent Application US 2007/0022348 A1 discloses a method and apparatus for reducing the uncorrectable error rate in a lock stepped dual-modular redundancy system.

US 2005/0114735 A1 discloses systems and methods for verifying core determinacy in a processor.

### SUMMARY OF THE INVENTION

It is an object of the present invention to provide vehicle electronic control system for safety-relevant applications, which reduces the number of individual devices, does not increase a housing size, does not increase the complexity of the passive or active cooling, shows a remarkable data transmission speed between the components and maintains the overall reliability of the system.

The above object is achieved by a vehicle electronic control system for safety-relevant applications which comprises the features of claim 1.

According to the present invention, there is provided a vehicle safety electronic control system. The system comprises a performance cluster and a safety island both of which are realized on a system-on-chip. The performance cluster has at least two cores. The at least two processing cores are processing the safety relevant data identical in each core. The processed data are compared and result in the high diagnostic coverage, which for example is needed for ASIL D. Is noted that the concept of the present invention is also applicable in other fields than ADAS. Additionally, lower diagnostic coverage than ASIL-D can be required as well. Other applications for the inventive idea relate to the chassis of the vehicle, the powertrain of the vehicle and/or the body domain controller of the vehicle.

At least one lockstep core is part of the safety island, wherein said lockstep core is configured to monitor and control outputs of said at least two cores of the performance cluster.

The advantage of the present invention is that it provides significantly improved processing performance for advanced driver assistance systems, whilst ensuring that safety-related software routines are subjected to reliable diagnostic measures in order to satisfy the functional safety integrity requirements. With combination of lockstep cores with high performance cores on a single chip, amount of external connections (pins) are reduced. What improve power consumption, data exchange between cores, size of the PCB/ECU.

The at least one lockstep core is configured to receive, from said performance cluster data representing the direct outputs of the at least two cores of the performance cluster. According to a preferred embodiment of the present invention, the vehicle safety electronic control system is defined as a system on a chip having a lockstep architecture with a minimum one lockstep core. Additionally, at least three processing cores are provided, wherein the lockstep core is configured to monitor and control outputs of said at least three processing cores.

The at least one lockstep core is configured to receive, from said performance cluster, data representing a comparison of the outputs of the cores. The at least one lockstep core is configured to derive therefrom an operational status of the performance cluster.

Said system-on-chip is configured to determine from said comparison data whether either of said cores of the performance cluster is disturbed or faulty. Said at least one lockstep core is configured to do at least one of the following: determining that either of said cores is disturbed or faulty, send an error message to a vehicle safety system, reset the disturbed or faulty core and enter the disturbed or faulty core into a predefined safe state.

Comparing the results of the three processing cores processing the safety relevant data, it is possible to identify a core with a processing failure. By presence of a core failure the system-on-chip is operable and fail functional.

The two processing cores are processing the safety relevant data (e.g. sensor fusion, situation analysis, actuator operation) in the first core. The second core processes the safety relevant data in a reduced version (e.g. most critical objects for sensor fusion, simplified situation analysis, rough actuator operation).

The correctness of the safety relevant data from first core is advantageously checked on the lockstep core with the data of the second core (e.g. most matching actuator steering). The processed data is monitored and result in the medium diagnostic coverage needed for ASIL B/C. Advantageously the second core is possible to process additional data in QM quality. Advantageously the program processed on the second core is divers.

Advantageously, the system-on-chip is monitoring all different input voltages, for example lockstep and processing cores, communication interfaces, internal busses and memory.

Advantageously, the system-on-chip is monitoring all internal generated voltages, for example lockstep and processing cores, communication interfaces, internal busses and memory.

Advantageously, the system-on-chip is monitoring all different frequencies, for example lockstep and processing cores, communication interfaces, internal busses and memory.

Advantageously, the system-on-chip is monitoring the chip/die temperature with at least one temperature sensor.

Advantageously, the system-on-chip controls the possible hardware errors with an error management unit.

The error management unit has inputs for the various transient and permanent errors detected on the system-on-chip.

Advantageously, said error management unit is configurable for different outputs, for example: non maskable interrupt, interrupt, core reset, chip/die reset, change level of an error signaling pin.

Advantageously, the system-on-chip has internal bus connections with higher data transmission rate between the at least one lockstep core and the non-lockstep cores compared with two or more separate components connected with an external bus. The system-on-chip may have at least one non-lockstep core.

Preferably, said lockstep core is configured to receive, from said at least one non-lockstep core, data representing the processed results.

Advantageously, said lockstep core of the system-on-chip is configured to receive, from said non-lockstep cores, data representing a comparison of the outputs of non-lockstep cores, and is configured to derive therefrom an operational status of the non-lockstep cores.

Conveniently, said lockstep core is configured to determine from said comparison data whether either of said non-lockstep cores is disturbed or faulty.

Preferably, said lockstep core is configured to do at least one of the following in response to determining that either of said non-lockstep cores is disturbed or faulty: send an error message to a vehicle safety system, reset the disturbed or faulty core, and enter the disturbed or faulty core into a predefined safe state. Advantageously, both of said two cores of the system-on-chip are operable to execute the same software operation in synchronism to obtain respective results, and each of said two cores is operable to compare its respective result with the result of the other core to thereby derive said comparison data.

Conveniently, each of said two cores of the system-on-chip is operable to compare its said result with said result of the other core after each frame during execution of said software.

Preferably, said cores of the system-on-chip are operable to execute vehicle safety-related software.

Advantageously, said lockstep core and non-lockstep cores are configured to operate synchronously.

Conveniently, said lockstep core is configured to monitor the non-lockstep cores cyclically with a predetermined cycle time.

Preferably, said cycle time is shorter than the time required to transition the at least one non-lockstep core to its respective said safe state.

Advantageously, said lockstep core is configured to act as a watchdog timer for the non-lockstep cores.

Conveniently, the lockstep core is operable to execute a software watchdog application.

Preferably, said software watchdog application includes a heartbeat monitoring unit, a program flow checking unit and a task state indication unit.

Advantageously, the control system is provided in the form of an integrated electronic control unit.

The electronic control system of the present invention may be provided as a part of an electronic system for safety-relevant applications in a motor vehicle such as, for example, an Advanced Driver Assistance System (ADAS) which may include, but is not limited to ,a blind spot monitoring system; an active cruise control system; a pre-safe braking system; a collision avoidance system; a lane departure prevention system; a rear-collision mitigation system; chassis monitoring system, powertrain monitoring systems, body domain controller and/or an autonomous driving. It should be noted that the above listing of applications of the present invention is not closed listing.

### BRIEF DESCRIPTION OF THE DRAWINGS

The the invention may be more readily understood, and so that further features thereof may be appreciated, embodiments of the invention will now be described by way of example with reference to the accompanying drawings in which:
**Figure 1** is a schematic illustration showing an overview of a typical motor vehicle control system for a safety relevant application, which may include an electronic control system in accordance with the present invention;
**Figure 2A** is a schematic illustration showing an overview of the principal hardware elements of an electronic control system in accordance with the present invention;
**Figure 2B** is a schematic illustration showing an overview of the principal hardware elements of a further embodiment of the electronic control system in accordance with the present invention;
**Figure 3** is a schematic illustration, similar to that of figure 2A, which shows a preferred allocation of the system-on-chip cores to ASIL integrity requirements;
**Figure 4** is a schematic illustration in the form of a flow diagram depicting aspects of a software monitoring aspect of a preferred embodiment of the invention; and
**Figure 5** is a schematic illustration showing an electronic control system in accordance with the present invention installed as part of a motor vehicle safety system.

### DETAILED DESCRIPTION

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

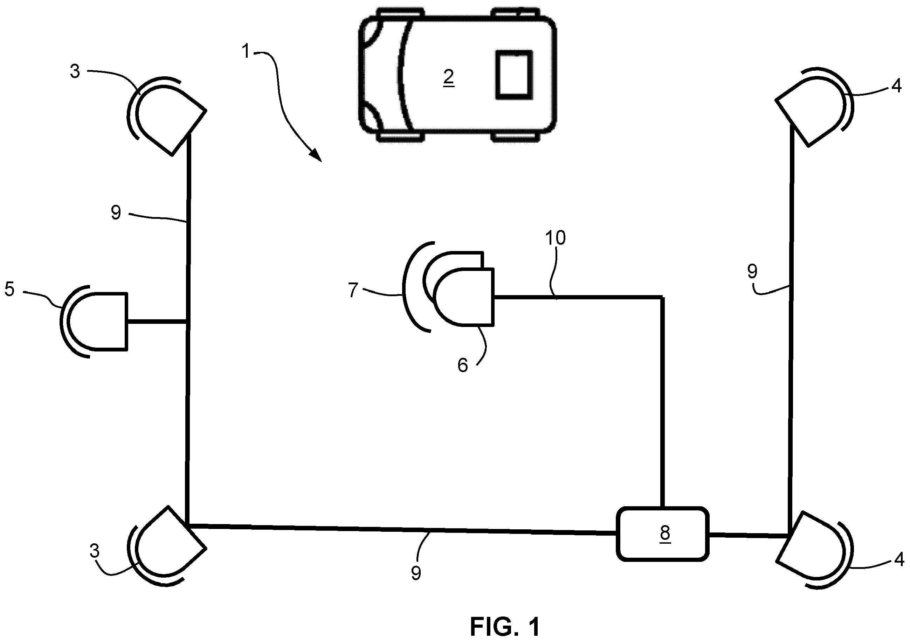

**Figure 1** shows in more detail a schematic representation of an exemplary electronic safety system 1 installed in a motor vehicle 2 (vehicle top view). The safety system 1 comprises a number of different types of sensors mounted at appropriate positions on the motor vehicle 2. In particular, the electronic safety system 1 illustrated includes: a pair of divergent and outwardly directed mid-range radar ("MRR") sensors 3 mounted at respective front corners of the vehicle 2, a similar pair of divergent and outwardly directed multi-role radar sensors 4 mounted at respective rear corners of the vehicle, a forwardly directed long-range radar ("LRR") sensor 5 mounted centrally at the front of the vehicle 2, and a pair of generally forwardly directed optical sensors 6 forming part of a stereo vision system ("SVS") 7 which may be mounted, for example, in the region of the upper edge of the vehicle's windscreen. The various sensors 3-6 are operatively connected to a central electronic control system which is typically provided in the form of an integrated electronic control unit 8 mounted at a convenient location within the vehicle 2. In the particular arrangement illustrated, the front and rear MRR sensors 3, 4 are connected to the integrated electronic control unit 8 via a conventional Controller Area Network ("CAN") bus 9, and the LRR sensor 5 and the sensors of the SVS 7 are connected to the central control unit 8 via a faster FlexRay serial bus 10, also of a type known per se.

It should be noted that the above listing of sensors in not regarded as a limitation. The present invention employs as well other sensor types, for example LiDAR, Night Vision, Imaging Radar and others. It is noted as well that the data communication between the various sensors 3-6 of a vehicle 2 can be carried out by various types of busses, like CAN, CAN-FD, Ethernet-Bus, FlexRay , GMSL, , and other Vision-Buses and the like.

Collectively, and under the control of the integrated electronic control unit 8, the various sensors 3-6 can be used to provide a variety of different types of driver assistance systems such as, for example, blind spot monitoring, adaptive cruise control, collision prevention assist, lane departure protection, and rear collision mitigation. Accordingly, the integrated electronic control unit 8 will be configured to run appropriate software algorithms for each such driver system.

The above description of the embodiment shown in fig. 1 is limited to the field of advanced driver systems. As mentioned above the present invention is applicable as well in other areas (non-ADAS) of a vehicle, for example: chassis, powertrain, body domain controller and the like.

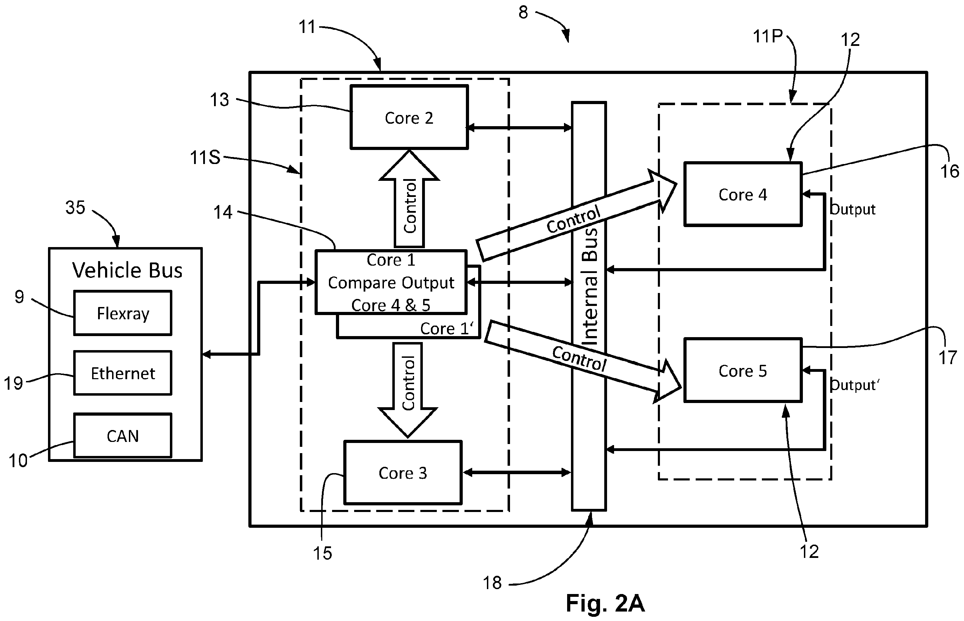

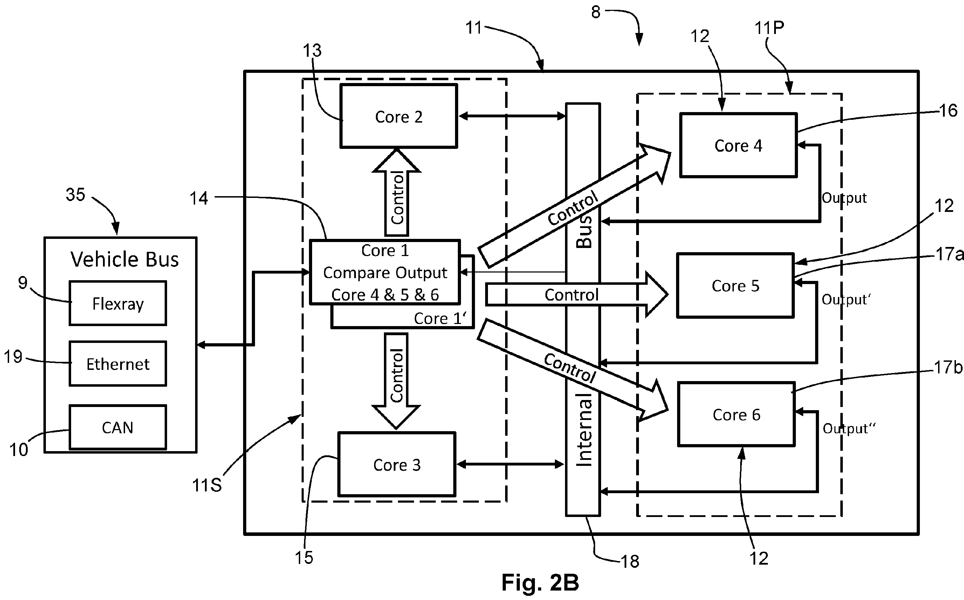

**Figure 2** illustrates schematically the principal hardware elements of an integrated electronic control system 8 in accordance with the present invention, which is provided in the form of the integrated electronic control unit 8 illustrated in figure 1. The integrated electronic control system 8 of the embodiment shown here, is a system-on-chip 11, which comprises pair of cores 12. The system-on-chip 11 comprises as well at least one core 14, which is configured to process a program code or data parallel in two separate logic units of the core 14. As will become apparent, the core 14 is configured to run safety software to live up to the strictest (ASIL-D) safety integrity requirements of the system, which require the identification of processing errors. The present invention can handle as well lower safety integrity requirements (ASIL < D) of the system. According to a preferred embodiment core 14 has a lockstep architecture. The pair of cores 12 has a higher processing power as core 14. The pair of cores 12 does not have a lockstep architecture. The pair of cores is configured to handle some safety-related processing tasks in order to relieve the at least one core 14. Because the core 14 is configured to satisfy the strict safety integrity requirements of the system it can be considered to represent a so-called "safety island" 11S. Similarly, because the cores 12 are configured to have a higher processing power than core 14 it can be considered to represent a so-called "performance cluster" 11P. The performance cluster 11P has a high demand on amount and speed of the data input what is supported by an internal bus 18 and a combination of core 14 (safety island 11S) and cores 12 (performance cluster 11P). Data processed by the performance cluster 11P is processed twice and need to be transmitted via internal bus 18 to the at least one core 14 (safety island) to compare and diagnose the correct processing of the performance cluster 11 P. The data transfer from the performance cluster 11P to the safety island 11S is improved by the invention.

In more detail, in the particular embodiment illustrated by figure 2A, the system-on-chip 11 has an architecture with five processing cores 13, 14, 15, 16 and 17. Core #1 / Core #1' is denoted with reference numeral 14. Core #2 is denoted with reference numeral 13. Core #3 is denoted with reference numeral 15. As will therefore be appreciated, core 14 can represent in one possible embodiment of the system-on-chip 11 a so-called lockstep core. The performance cluster 11P comprises in the illustrated embodiment two processing cores 16, 17, which are denoted "Core #4" and "Core #5" respectively in figure 2A. It is to be noted, however, that in other embodiments it is possible to have more processing cores (not illustrated in figure 2A).

It should be noted that embodiments of the invention are not limited to identifying the cores of the safety island 11S as "lockstep core" or having a "lockstep architecture". The cores of the safety island 11S are configured to process a program code or data parallel in two separate logic units of at least one core 14. When a new set of inputs reaches the system 8, it processes them, generates new outputs and updates its state. Those outputs or updates are not limited to "lockstep cores" or a "lockstep architecture".

**Figure 2B** illustrates schematically the principal hardware elements of an embodiment of the integrated electronic control system 8 in accordance with the present invention, which it will be appreciated could be provided in the form of the integrated electronic control system 8 illustrated in figure 1. The description below refers exclusively to the safety integrity requirements ASIL-D which needs to be covered by the system of the present invention should not be regarded as a limitation of the invention. The integrated electronic control system 8, can be configured as larger computer, which is able con control a wide variety of applications, not exclusively related to ADAS.

The electronic control system 8 comprises a system-on-chip 11 with a safety island 11S and a performance cluster 11 P. The performance cluster 11P comprises three non-lockstep cores 12. The safety island 11S comprises at least one lockstep core 14. As will become apparent, the at least one lockstep core 14 is configured to run safety software to live up to the strictest (ASIL-D) safety integrity requirements of the electronic control system 8, which require the identification of processing errors and thus a lockstep architecture, whilst the three non-lockstep cores 12 has a higher processing power and no lockstep architecture, and is configured to handle some safety-related processing tasks in order to relieve the lockstep core 14. It is well understood for a person skilled in the art, that the lockstep core 14 can be used as well to fulfil less strict ASIL safety integrity requirements of the electronic control system 8.

With an arrangement of three non-lockstep cores 12 the safety island 11S is able to detect a permanent or transient fault in one specific non-lockstep core 12. Under presence of a fault the system-on-chip 11 is still operable with two out of three non-lockstep cores 12.

Because the lock step core 14 is configured to satisfy the strict safety integrity requirements of the system 8 it can be considered to represent a so-called "safety island" 11S. Similarly, because the non-lockstep cores 12 are configured to have a higher processing power than the safety island 11S it can be considered to represent a so-called "performance cluster" 11P. The performance cluster 11P has a high demand on amount and speed of the data input what is supported by the internal bus 18 and combination of lockstep core 14 (Safety Island 11S) and non-lockstep cores 12 (performance cluster 11P). Data processed by the performance cluster 11P is processed three times and need to be transmitted via internal bus to the lockstep core 14 (Safety Island 11S) to compare and diagnose the correct processing of the performance cluster 11P.

In more detail, in the particular embodiment illustrated, the system-on-Chip 11 has a architecture comprising six processing cores 13, 14, 15, 16, 17a and 17b. Core #1 / Core #1' is denoted with reference numeral 14. Core #2 is denoted with reference numeral 13. Core #3 is denoted with reference numeral 15. The performance cluster 11P does not require a lockstep architecture. In the embodiment of Figure 2B the performance cluster 11P comprises three processing cores 16, 17a and 17b, which are denoted "Core #4", "Core #5" and "Core #6" respectively (see figure 2B). It is to be noted, however, that in other embodiments it is possible to have more processing cores being part of the performance cluster 11P (not illustrated in figure 2B). The arrangement fulfills a "fail functional" for permanent and transient faults on Core 16, 17a, 17b.

Accordingly, as denoted schematically in figure 2A and 2B , the lockstep core 14 is configured to monitor and control both of the processing cores 16 and 17 (fig. 2A) or the processing cores 16, 17a and 17b (fig. 2B) of the performance cluster 11P as well as its own other two processing cores 13 and 15 of the system-on-chip 11. As also illustrated in figure 2A an 2B, the system-on-chip 11 is configured for direct connection to the vehicle buses, which may include the CAN buses 10 and FlexRay buses 9 and an Ethernet bus 19.

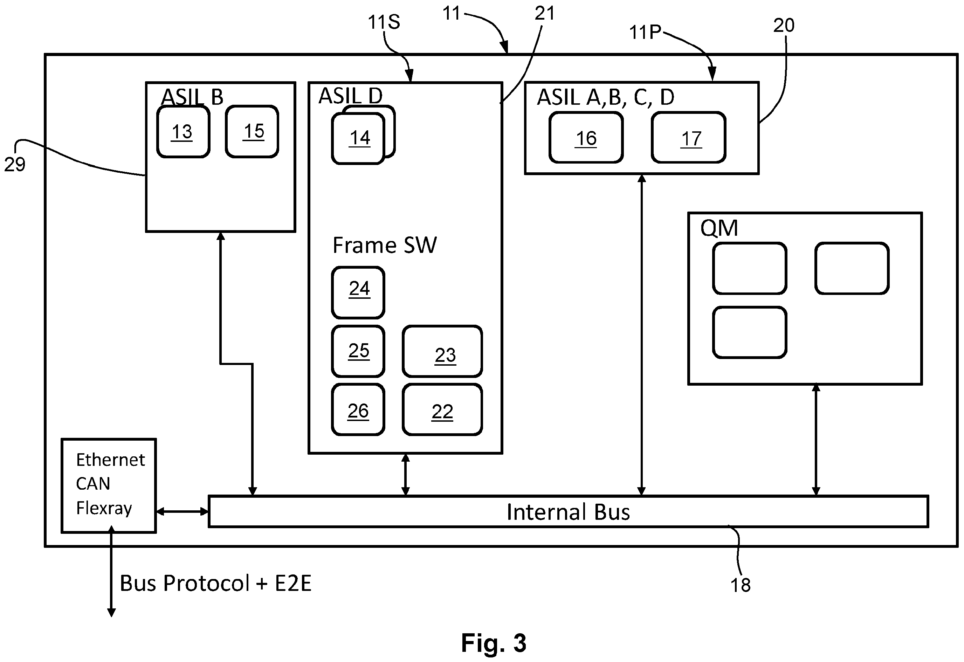

Turning now to consider **Figure 3****,** it will be noted that the two non-lockstep cores 13, 15 of the System-on-Chip 11 are configured to run safety related application software, denoted schematically by block 29 in figure 3. Because this software block 29 is safety related and not sensitive to transient faults, its processing is required a regular additional hardware test to satisfy the ASIL-B safety integrity requirement, and so can be reliably and safely handled by to the two non-lockstep cores 13, 15.

The two processing cores 16, 17 of the performance cluster 11P are configured to run safety-related application software, denoted schematically by block 20 in figure 3. The way the two non-lockstep cores 16, 17 operate will be described in more detail herein below, but it is to be noted that the cores 16, 17 operate in satisfaction of a (ASIL-A/B/C/D) safety integrity requirement, rather than the strictest (ASIL-D) standard. This is permissible in the electronic control system 1 of the present invention because, as will also be explained in more detail herein below, the outputs of the two performance cores 16, 17 are monitored and controlled by the lockstep core 14 of the system-on-Chip 11, which does operate in satisfaction of the strictest (ASIL-D) standard, via data exchange and compare on the internal bus 18. The double processing and compare mechanism ensure high diagnostic coverage of > 99%. Detection of permanent and transient hardware faults of core 16 and 17 and therefore satisfies up to ASIL-D requirements.

As will be noted, the particular configuration of the system-on-chip 11 illustrated in figure 3 is a core arrangement having other processing cores 13, 15 in addition to the two cores 16, 17 described above. This type of arrangement may be used to provide a sufficient number of processing cores to execute all necessary runnable non safety relevant QM tasks, such that each runnable task is executed on a dedicated core according the required ASIL of the tasks additional with hardware tests.

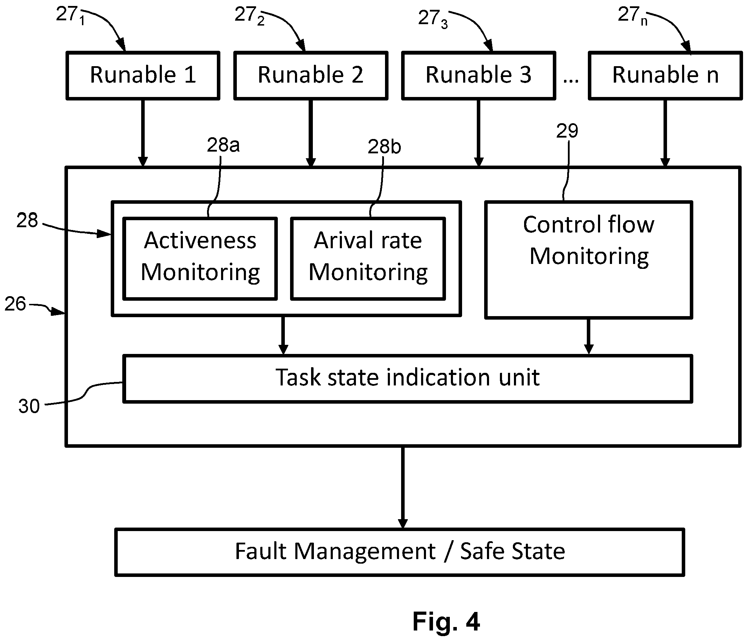

As well as monitoring and controlling the outputs of the two cores 16, 17, the lockstep core 14 of the system-on-chip 11 is configured to run frame software, as denoted by block 21 on figure 3. The frame software 21 may include various software components, activeness monitoring unit 28a (see fig. 4), arrival rate monitoring unit 28b (see fig. 4), control flow monitoring unit 29 (see fig. 4), and a task state indication unit 30 (see fig. 4); forming together a so-called complex software watchdog 26.

The System-on-chip 11 (master microcontroller) includes various hardware components to detect and handle failures such as; internal bus error correcting code 22, memory error correcting code 23, a safety management unit 24, and a memory protection unit 25.

The lockstep core 14 of the System-on-chip 11 is configured to monitor the processing cores 16 and 17 cyclically, with a preferred cycle time which is shorter than the time required to transition the cores 16 and 17 to a respective safe state. Furthermore, it will be appreciated that by virtue of the complex software watchdog 26, the lockstep core 14 acts as a supervisor for the performance cluster 11P.

In order to monitor the health of the electronic control system 1 and to react to hardware and software faults, a software service is provided by the lockstep core 14 to monitor individual application software components in runtime, thereby improving the overall dependability of the electronic control system 1 to meet the safety integrity requirements. The functional safety concept is supported by the complex software watchdog 26 which provides heartbeat monitoring and program flow checking. As will be appreciated, the software watchdog 26 is integrated in the software platform provided on the system-on-chip 11.

The preferred design of the software watchdog 26 follows the concept of heartbeat monitoring of runnable/application tasks 27₁, 27₂,..., 27ₙ and is illustrated schematically in **figure 4****.** The software watchdog 26 includes a heartbeat monitoring unit 28, a control flow monitoring unit 29, and a task state indication ("TSI") unit 30.

With the assistance of a heartbeat indication routine, the various runnable/application tasks 27₁, 27₂,..., 27ₙ report their heartbeats to the heartbeat monitoring unit 28 of the software watchdog 26. A deadline supervision mechanism of each task may be useful when the task has a relatively low execution priority and is interrupted by one or more tasks of higher priority. Other parameters, such as task response time, can also be used to define the health state of the system.

The control flow monitoring unit 29 monitors the execution sequence of the runnable/application tasks 27₁, 27₂,..., 27ₙ by comparing real executed successors with a predefined set of possible successors of the predecessors. The operating system executes all runnable tasks in a pre-defined order as defined by a fixed schedule table. The control flow monitoring unit 29 supervises the correct activation of the runnable tasks according to the fixed schedule table. Control flow checking can be achieved at various different levels of granularity.

Errors in any of the runnable tasks 27₁, 27₂,..., 27ₙ which are identified in by the heartbeat monitoring unit 28 and the control flow monitoring unit 29 are reported to the task state indication unit 30. The task state indication unit 30 then compares the number of detected errors with appropriate predefined threshold values, and generates therefrom individual supervision reports on each runnable task 27₁, 27₂,..., 27ₙ. These reports may then be used to derive indication states for the various tasks, which in turn can be used to determine the status of the various software applications.

Turning now to consider the safety-related software 20 which is run by the two processing cores 16, 17 of the performance cluster 11P, it is to be noted that in preferred embodiments both of the cores 16, 17 are configured to execute the same software operations in synchronism to thereby obtain respective results. This is to ensure that appropriate data is generated to pass to the lockstep core 14 to satisfy the highest (ASIL-D) safety integrity requirement. Each of the cores 16, 17 then operates to compare its respective result with the result of the other core to thereby derive comparison data which comprises two compared results; one provided by each core 16, 17. It is considered particularly advantageous for each of the cores 16, 17 to compare its respective result with the corresponding result of the other slave core after each frame during execution of the software, to provide complete comparison data. It is to be noted, however, that whilst currently preferred embodiments are operable to derive comparison data comprising two compared results as explained above, in other embodiments it will be possible to derive only a single compared result, for example when sending the processed data of both cores 16, 17 directly to the safety Island 11S. Also, in some arrangements non-safety related tasks could be processed by the two cores 16, 17 in addition to the safety related tasks.

The comparison data obtained in the above-described manner by the cores 16, 17 is then sent to the lockstep core 14 via internal bus 18 together with a processed Cyclic Redundancy Code, message counter and time stamp, for further processing (in accordance with ASIL-D requirements) by its frame software 21. The lockstep core 14 is thus configured to run a diagnostic algorithm on the comparison data to derive an operational status of the performance cluster 11P, to thereby determine whether or not the performance cluster 11P is operating correctly. More particularly, the lockstep core 14 is operable to determine, from said comparison data received from the performance cluster 11P, whether either of said cores 16, 17 is disturbed or faulty. If either core 16, 17 is determined to be disturbed or faulty then the lockstep core 14 will send an error message to the relevant receiver (vehicle) to thereby enter it into a safe mode.

The two processing cores 16, 17 are able to run safety-related software with high processing power, whilst the results and comparison data are reviewed by the lockstep core 14 to satisfy safety integrity requirements up to the ASIL-D level. As will also be appreciated, by only sending the comparison data from the cores 16, 17 to the lockstep core 14 for further processing, rather than the complete data generated, the lockstep core 14 is able to function efficiently with its relatively low (in comparison to the cores 16, 17) processing power.

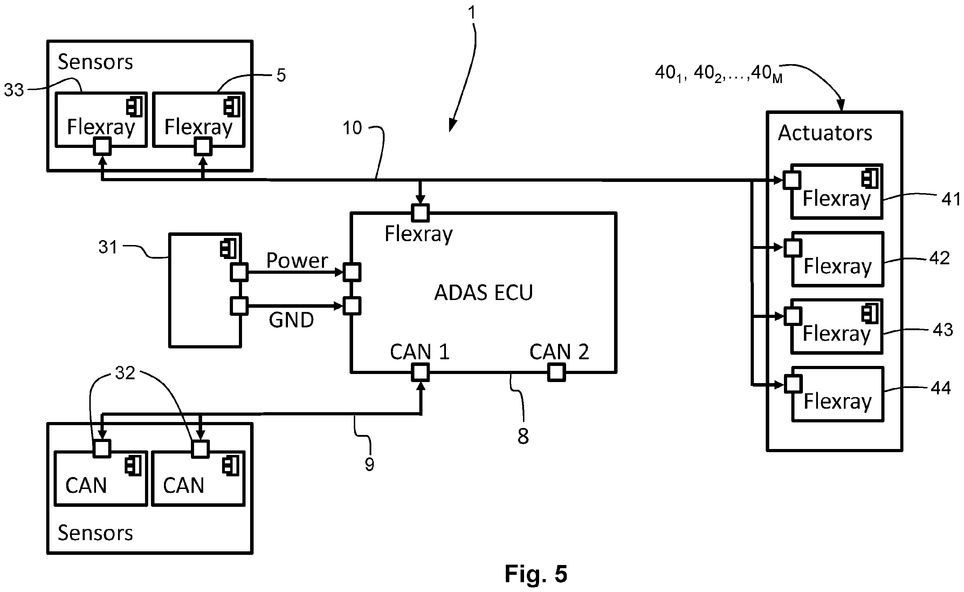

**Figure** 5 is a schematic illustration showing the electronic control system 1 of the present invention embodied in an integrated electronic control unit 8 and forming part of a vehicle safety electronic control system 1. The electronic control unit 8 is connected to a suitable power supply 31, and the safety system 1 which it is arranged to control and operate comprises a number of different types of sensors, including: a pair of rear short range radar sensors 32 which are connected to the control unit 8 via a CAN bus 9, an surcharge velocity sensor (SVS) array 33 which is connected to the control unit via a FlexRay bus 10, and a front long range radar sensor 5 which is also connected to the control unit 8 via the FlexRay bus 10. Additionally, the vehicle safety electronic control system 1 comprises a number of actuators 40₁, 40₂,...,40_{M} which are controlled by the control unit 8 to implement corrective actions to maintain the safety of the vehicle in response to signals from the sensors 5, 32, 33 or display or sound alerts to the driver of the vehicle 2. In the specific embodiment of the system illustrated in figure 5, the actuators include are provided as part of: the vehicle's 2 electronic stability/brake system 41, the vehicle's engine control system 42, the vehicle's steering system 43, and the vehicle's instrument cluster 44. All of the actuators 40₁, 40, 40₃, 40₄ are connected to the control unit 8 via the FlexRay bus 10.

It has been found that the safety electronic control system 1 of the present invention, comprising a multi-core system-on-Chip 11 with a lockstep architecture and a performance Cluster 11P having at least two processing cores 16, 17, provides high overall processing power whilst still satisfying the safety integrity requirements up to the ASIL-D level, by using core redundancy in the lockstep core 14 to achieve the required diagnostic functionality in a very short time period.

In variants of the safety electronic control system 1 of the present invention, it will be possible to provide an additional core 14 (core #i1') in the performance cluster 11P to thereby provide a so-called 2oo3 architecture. In this type of arrangement, the performance cluster 11P would then function as a so-called "fail operational" processor, and a defective performance core 16, 17a, 17b could then be identified by comparing the processing results of all three performance cores 16, 17a, 17b. This would then permit the software to continue to run even in the event that one of the performance cores 16, 17a, 17b is faulty, whilst still satisfying the relevant ASIL safety requirements. If more processing power is required, additional performance cores could be provided, or even additional external performance microcontrollers.

It is to be noted, that whilst the present invention has been described above with reference to a particular embodiment in which data is sent between the lockstep core 14 and the performance cluster 11P via the internal bus 9, it is also possible to connect the performance cluster 11P to a vehicle bus 35, and to transmit the data over that connection.

When used in this specification and claims, the terms "comprises" and "comprising" and variations thereof mean that the specified features, steps or integers are included. The terms are not to be interpreted to exclude the presence of other features, steps or integers.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### List of Reference Numerals

- 1: Vehicle safety electronic control system
- 2: Motor vehicle
- 3: Mid-range radar sensor
- 4: Multi-role radar sensor
- 5: Long-range radar sensor
- 6: Optical sensor
- 7: Stereo vision system
- 8: Electronic control unit
- 9: Serial bus, CAN bus
- 10: Bus, FlexRay bus
- 11: System-on-chip
- 11P: Performance cluster
- 11S: Safety island
- 12: Core
- 13: Core #2
- 14: Core #1/Core #1'
- 15: Core #3
- 16: Core #4
- 17: Core #5
- 17a: Core #5
- 17b: Core #6
- 18: Internal bus
- 19: Ethernet bus
- 20: Block, safety-related software
- 21: Block
- 22: Internal bus error correcting code
- 23: Memory error correcting code
- 24: Safety management unit
- 25: Memory protection unit
- 26: Software, watchdog
- 27₁, 27₂,..., 27ₙ: Runable task
- 28: Heartbeat monitoring unit
- 28a: Activeness monitoring unit
- 28b: Arrival rate monitoring unit
- 29: Block, control flow monitoring unit
- 30: Task state indication unit
- 31: Power supply
- 32: Short range radar sensors
- 33: Surcharge velocity sensor
- 35: Vehicle bus
- 40₁, 40₂,...,40_{M}: Actuator
- 41: Electronic stability/brake system
- 42: Engine control system
- 43: Steering system
- 44: Instrument cluster

## Claims

1. A vehicle electronic control system (1) for safety-relevant applications **characterized by**:
• a performance cluster (11P) and a safety island (11S) both of which are realized on a system-on-chip (11);
• at least two cores (16, 17) are part of the performance cluster (11P); and
• at least one lockstep core (14) is part of the safety island (11S), wherein said lockstep core (14) is configured to monitor and control outputs of said at least two cores (16, 17) of the performance cluster (11P).

2. The vehicle electronic control system (1) for safety-relevant applications according to claim 1, wherein said at least one lockstep core (14) is configured to receive, from said performance cluster (11P) data representing the direct outputs of the at least two cores (16, 17) of the performance cluster (11 P).

3. The vehicle electronic control system (1) for safety-relevant applications according to any of the preceding claims, wherein the at least one lockstep core (14) is configured to receive, from said performance cluster (11 P), data representing a comparison of the outputs of the cores (16, 17), and is configured to derive therefrom an operational status of the performance cluster (11 P).

4. The vehicle electronic control system (1) for safety-relevant applications according to claim 3, wherein said system-on-chip (11) is configured to determine from said comparison data whether either of said cores (16, 17) of the performance cluster (11P) is disturbed or faulty.

5. The vehicle electronic control system (1) for safety-relevant applications according to claim 3 claim 4, wherein said lockstep core (14) is configured to do at least one of the following in response: determining that either of said cores (16, 17) is disturbed or faulty; send an error message to a vehicle safety system; reset the disturbed or faulty core (16, 17) and enter the disturbed or faulty core (16, 17) into a predefined safe state.

6. The vehicle electronic control system (1) for safety-relevant applications according to any one of claims 3 to 5, wherein all of the at least two cores (16, 17) of the performance cluster (11P) are operable to execute the same software operation (20) in synchronism to obtain respective results, and each of said at least two cores (16, 17) is operable to compare its respective result with the result of the other core (16, 17) to thereby derive said comparison data.

7. The vehicle electronic control system (1) for safety-relevant applications according claim 6, wherein each of said at least two cores (16, 17) is operable to compare its said result with said result of the other core (16, 17) after each frame during execution of said software (20).

8. The vehicle electronic control system (1) for safety-relevant applications according to any preceding claim, wherein said cores (16, 17) are operable to execute vehicle safety related software (20).

9. The vehicle electronic control system (1) for safety-relevant applications according to any preceding claims, wherein said performance cluster (11P) and said safety island (11S) are configured to operate synchronously.

10. The vehicle electronic control system (1) for safety-relevant applications according to any of the preceding claims, wherein said safety Island (11S) is configured to monitor the performance cluster (11P) cyclically with a predetermined cycle time.

11. The vehicle electronic control system (1) for safety-relevant applications according claim 10 wherein said cycle time is shorter than the time required to transition at least one core (16, 17) to its respective said safe state.

12. The vehicle electronic control system (1) for safety-relevant applications according to any of the preceding claims, wherein said system-on-chip (11) is configured to act as a watchdog timer for the performance cluster (11P).

13. The vehicle electronic control system (1) for safety-relevant applications according claim 12 wherein the lockstep core (14) is operable to execute a complex software watchdog (26) application which includes

14. The vehicle electronic control system (1) for safety-relevant applications according to any preceding claims, provided in the form of an integrated electronic control unit, which has a heartbeat monitoring unit (28), a control flow monitoring unit (29), and a task state indication unit (30).

15. The vehicle electronic control system (1) for safety-relevant applications according to any preceding claims, wherein at least one electronic control unit (8) is realized in one centralized computer.
